(19) **Europäisches Patentamt / European Patent Office / Office européen des brevets**

(11) **EP 2 874 962 B1**

(12) **FASCICULE DE BREVET EUROPEEN**

(45) Date de publication et mention
de la délivrance du brevet:
**28.11.2018  Bulletin 2018/48**

(21) Numéro de dépôt: **13747456.5**

(22) Date de dépôt: **17.07.2013**

(51) Int Cl.:
*C04B 5/06* (2006.01)          *C04B 7/153* (2006.01)
*C04B 7/19* (2006.01)          *C04B 28/08* (2006.01)

(86) Numéro de dépôt international:
**PCT/FR2013/051722**

(87) Numéro de publication internationale:
**WO 2014/013199 (23.01.2014 Gazette 2014/04)**

(54) **LIANT A BASE DE LAITIER DE HAUT FOURNEAU**

BINDEMITTEL AUS HOCHOFENSCHLACKE

BINDER MADE OF BLAST-FURNACE SLAG

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.07.2012  FR 1256967**

(43) Date de publication de la demande:
**27.05.2015  Bulletin 2015/22**

(73) Titulaire: **Saint-Gobain Weber
77170 Servon (FR)**

(72) Inventeurs:
• **HESSELBARTH, Frank
45659 Recklinghausen (DE)**
• **DUDDA, Udo
44869 Bochum (DE)**

(74) Mandataire: **Saint-Gobain Recherche
Département Propriété Industrielle
39 Quai Lucien Lefranc
93300 Aubervilliers (FR)**

(56) Documents cités:
**DE-B- 1 006 327     DE-B3- 10 257 879**

• **CHEMICAL ABSTRACTS, 27 juillet 1981
(1981-07-27), XP000184484, ISSN: 0009-2258**
• **DATABASE WPI Week 197948 Thomson
Scientific, London, GB; AN 1979-86948B
XP002694573, & JP 54 136595 A (SUMITOMO
METAL IND LTD) 23 octobre 1979 (1979-10-23)**
• **DATABASE WPI Week 198829 Thomson
Scientific, London, GB; AN 1988-201700
XP002694574, & JP 63 139037 A (HANSHIN
YOSETSU KIZAI KK) 10 juin 1988 (1988-06-10)**
• **DATABASE WPI Week 197734 Thomson
Scientific, London, GB; AN 1977-60118Y
XP002694575, & JP 52 082694 A (NIPPON STEEL
CORP) 11 juillet 1977 (1977-07-11)**

**Description**

La présente invention concerne un liant utilisé pour les matériaux de construction, à base de laitier de haut fourneau, ainsi que le procédé de préparation d'un tel liant, les compositions de mortier ou béton comprenant ledit liant, ainsi que leur procédé de préparation et les matériaux de construction obtenus à partir de ces compositions. La présente invention porte également sur un procédé d'élimination ou réduction de l'odeur de soufre dégagée lors de la fabrication de matériaux de construction à base de laitiers de haut fourneau.

La plupart des problèmes environnementaux liés à la production de ciment concerne la fabrication du clinker qui nécessite des opérations de décarbonatation, de calcination, de clinkérisation et de chauffage, notamment à des températures très élevées, de l'ordre de 1450°C. La production d'une tonne de ciment Portland génère entre 0,7 et 1 tonne de dioxyde de carbone.

De nombreux efforts sont donc réalisés pour réduire l'empreinte carbone du ciment et une des solutions envisagées actuellement consiste à utiliser des matières premières de substitution à base de déchets industriels. Il est possible de réduire la teneur en clinker du ciment, en incorporant des ajouts cimentaires comme les cendres volantes, le laitier de haut fourneau granulé broyé, les fumées de silice, le métakaolin ou les cendres volcaniques pouzzolaniques, les pouzzolanes naturelles pour fabriquer des ciments composés, souvent appelés ciments de mélange. De tels ciments sont notamment décrits dans la norme EN197-1qui définit les spécifications de 27 ciments courants et de leurs constituants.

En raison d'une réactivité importante, les ciments comprenant du laitier de haut fournier sont particulièrement intéressants. Le laitier de haut fourneau est un co-produit issu de la fabrication de la fonte à partir de minerai de fer ; il correspond à la gangue stérile du minerai de fer, isolée de la fonte liquide par différence de densité. Le laitier fondu est plus léger et flotte sur le bain d'acier liquide. Un laitier de haut fourneau comprend essentiellement des silicates, et en quantités moindres des sulfures. Le laitier vitrifié obtenu par refroidissement brutal ou trempe du laitier fondu à l'aide d'air et/ou de jets d'eau à haute pression a une structure vitreuse. Cela lui permet de développer des propriétés hydrauliques : on parle de laitier granulé dont le diamètre des particules est inférieur à 5mm. Les laitiers granulés peuvent être finement broyés après séchage et utilisés dans l'industrie cimentaire. La plupart des laitiers de haut fourneau granulés broyés ont une finesse comprise entre 3800 et 4500 cm$^2$/g (également exprimée en unité Blaine).

Les ciments CEM II/A-S, encore appelés ciments Portland au laitier contiennent de 65 à 94% poids de clinker et de 6 à 35% poids de laitier de haut fourneau granulé broyé. Les ciments CEM III/A-B-C, ou ciments de haut fourneau contiennent de 36 à 95% de laitier et de 5 à 64% de clinker. Des travaux effectués récemment ont montré qu'il était possible de remplacer plus de 95% de ciment Portland par du laitier de haut fourneau granulé broyé, voire même d'utiliser ce laitier comme liant pour les matériaux de construction. On citera par exemple les brevets FR-B-2952050 et US-B-6,409,820 qui décrivent des liants performants à base de laitier de haut fourneau granulé broyé, utilisables dans des conditions « douces » c'est-à-dire sans nécessiter l'utilisation d'un système activateur fortement basique et par conséquent dangereux à manipuler.

Du soufre est présent dans le laitier de haut fourneau et, principalement sous forme de sulfures puisque le procédé de production d'acier se fait dans des conditions réductrices. Lorsque du laitier de haut fourneau est en contact avec un environnement acide, du sulfure d'hydrogène peut être libéré. Il est bien connu que ce composé sulfuré a une odeur désagréable, rappelant l'oeuf pourri, et devient même un poison lorsqu'il est présent à fortes concentrations. Le seuil de détection olfactive est très faible et la présence d'un tel gaz peut être décelée à partir de 0,0005 ppm, ce qui correspond à quelques molécules par pièce. Le seuil létal est d'environ 800 ppm. Ce niveau de concentration n'est jamais atteint dans les matériaux de construction. Toutefois, l'odeur peut être inconfortable car très intense et perceptible à une concentration très faible.

Un autre problème connu dans les matériaux de construction dû à la présence de composés sulfurés dans les laitiers de haut fourneau est lié à leur couleur spécifique. Lors de l'hydratation du laitier, sa couleur est modifiée et passe d'une couleur gris clair à une couleur bleu/verte. Selon les théories les plus courantes, ce changement s'expliquerait par une première réaction entre les composés sulfurés contenus dans le laitier de haut fourneau et les sels de calcium contenus dans le laitier de haut fourneau pour former des sulfures de calcium, qui, à leur tour, réagissent avec des ions fer et manganèse présents dans le laitier et forment des complexes polysulfurés ayant une couleur intense bleue/verte. Cette coloration est souvent interprétée comme étant le signe d'un béton de bonne réactivité, de qualité et durable, en raison de sa structure dense. En effet dès que ces sulfures sont en contact avec l'oxygène de l'air, ils s'oxydent en sulfite ou sulfates, qui eux sont incolores et la décoloration disparait de façon irréversible. Dans une structure en béton très dense, la coloration verte peut rester dans le coeur de la structure pendant plusieurs années, mettant ainsi en évidence une structure dense et étanche à l'air. Dans la plupart des cas, par exemple pour des joints, mortiers ou éléments en béton à base de laitier, cette décoloration n'est pas du tout gênante. Il existe toutefois certaines applications où cette coloration bleutée peut être problématique. Par exemple, dans le cas de fixation de carreaux de piscine, il existe toujours un risque d'avoir un excédent de matériau visible, comme par exemple du mortier de jointement. Si la piscine est remplie d'eau rapidement après avoir posé les joints, le processus d'oxydation avec l'air peut ne pas être encore terminé et la couleur bleue/verte peut rester visible de façon permanente, ce qui peut gêner l'aspect esthétique de la piscine. Le même genre de problèmes peut se rencontrer si un béton fraichement coulé est décoffré et soumis trop rapidement et longtemps à la pluie.

Les demandes de brevet WO 2012/083384 et WO 2009/144141 décrivent des compositions durcissables à base de laitier comprenant un additif à base de zinc permettant d'améliorer ou d'éliminer la décoloration indésirable. La présence d'un composé activateur alcalin est indispensable dans ces compositions. D'autres solutions pour accélérer l'élimination de la coloration bleue/verte sont proposées par des producteurs de ciment : elles consistent à réaliser des traitements de surface avec 3 à 10% de peroxyde d'hydrogène et des agents de blanchiment tels que l'hypochlorure de sodium à des concentrations variant entre 3 et 6%.

Suleimenov, S.T et al dans « Phosphorus slag-based concretes activated by complex additives (CHEMICAL ABSTRACTS, 27 juillet 1981 (1981-07-27), ISSN: 009-2258) décrit des bétons à base de laitiers phosphorés actives par des additifs comprenant le mélange de ciment Portland ou de poussières issues des fours rotatifs cimentaires et de nitrates de Fe, Co, Ni, Cu et Zn. DE10257879 B3 décrit un additif pour une composition cimentaire, l'additif comprenant un agent à base de sel d'étain, permettant de réduire le chrome VI. DE1006327 B1 décrit une composition de béton comprenant un additif permettant de limiter le retrait lors de la prise. JP54136595 décrit la réduction de soufre dégagée dans le laitier de haut fourneau par l'utilisation du produit de réaction entre le sulfite de calcium, le gypse et le carbonate de calcium.

Mais ces solutions ne permettent pas d'éliminer l'odeur caractéristique due à la présence de soufre.

Il existe aujourd'hui un réel besoin de trouver une solution simple pour supprimer ou limiter les problèmes liés aux mauvaises odeurs dégagées par les liants à base de laitier de haut fourneau granulé broyé et en même temps les problèmes liés à la décoloration, lorsque ces liants sont utilisés comme liant unique, ou en mélange avec un autre type de liant. C'est dans ce cadre que s'inscrit la présente invention

La présente invention porte sur un liant pour matériaux de construction qui comprend au moins :

- un laitier de haut fourneau granulé broyé et
- entre 0,05 et 5% en poids, par rapport à la quantité de laitier, d'un sel métallique mono-, di- ou trivalent choisi parmi les sels de bismuth, de cuivre, d'argent ou d'étain, le sel étant susceptible de former lors du mélange avec ledit laitier un sulfure métallique dont le produit de solubilité $K_{SP}$ mesuré à 25°C est inférieur à $10^{-10}$.

Le liant selon la présente invention peut avantageusement être constitué de :

- un laitier de haut fourneau granulé broyé et
- entre 0,05 et 5% en poids, par rapport à la quantité de laitier, d'un sel métallique mono-, di- ou trivalent choisi parmi les sels de bismuth, de cuivre, d'argent ou d'étain, le sel étant susceptible de former lors du mélange avec ledit laitier un sulfure métallique dont le produit de solubilité $K_{SP}$ mesuré à 25°C est inférieur à $10^{-10}$.

De façon préférée, le produit de solubilité du sulfure métallique $K_{SP}$ mesuré à 25°C est inférieur à $10^{-20}$.

L'ajout d'un sel métallique tel que décrit ci-dessus permet avantageusement de réduire de façon importante l'odeur de soufre et également de limiter les problèmes de décoloration rencontrés avec ce type de liant à base de laitier de haut fourneau.

Le sel métallique, lorsqu'il est mis en présence du liant à base de laitier de haut fourneau réagit avec les composés soufrés présents pour former un complexe sulfuré, qui va précipiter et rester sous forme solide. Le fait que le produit obtenu soit très peu soluble permet de piéger sous forme solide les composés responsables de la mauvaise odeur.

La solubilité d'un composé est caractérisée par un produit de solubilité, noté $K_{sp}$, qui est la constante d'équilibre de la réaction correspondant à la dissolution d'un solide dans un solvant.

La dissolution d'un solide de formule $A_aB_b$ est décrite par la réaction suivante :

$$A_aB_b \text{ (solide)} \rightleftharpoons aA^{b+} \text{ (aqueux)} + bB^{a-} \text{ (aqueux)}$$

Le composé $A_aB_b$ étant solide, son coefficient d'activité est égal à 1 et les activités des ions dans un milieu aqueux s'assimilent à leurs concentrations en mol/l.

Le produit de solubilité $K_{sp}$ est donc défini de la façon suivante :

$$K_{sp}=[A^{b+}]^a.[B^{a-}]^b$$

A titre d'exemple, les produits de solubilité de différents sulfures, mesurés à 25°C sont donnés dans le tableau ci-dessous (tableau 1).

| Sulfures | Produit de solubilité mesuré à 25°C |
|---|---|
| $Bi_2S_3$ | $1,6 \cdot 10^{-72}$ |
| CdS | $1,0 \cdot 10^{-28}$ |
| CoS | $5 \cdot 10^{-22}$ |
| CuS | $8 \cdot 10^{-17}$ |
| FeS | $4 \cdot 10^{-19}$ |
| PbS | $7 \cdot 10^{-29}$ |
| MnS | $7 \cdot 10^{-16}$ |
| HgS | $1,6 \cdot 10^{-54}$ |
| NiS | $3 \cdot 10^{-21}$ |
| $Ag_2S$ | $5,5 \cdot 10^{-51}$ |
| SnS | $1 \cdot 10^{-26}$ |
| ZnS | $2,5 \cdot 10^{-22}$ |

Ce tableau donne les valeurs de produit de solubilité des composés sulfurés simples ; toutefois les ordres de grandeur des produits de solubilité des composés polysulfurés devraient rester les mêmes.

De façon surprenante, les inventeurs de la présente invention ont trouvé qu'en ajoutant certains sels métalliques dont les composés polysulfurés correspondants formés par réaction avec le laitier de haut fourneau sont très peu solubles dans l'eau, ce qui se caractérise par de très faibles valeurs de produits de solubilité, il était possible de réduire considérablement l'odeur caractéristique du sulfure d'hydrogène et simultanément limiter la décoloration des produits contenant ce type de laitier.

Les métaux tels que le bismuth, le cuivre, le mercure et l'argent se sont montrés particulièrement efficaces. Toutefois, pour des raisons de toxicité, le mercure n'est pas retenu.

La quantité de sel métallique représente entre 0,05 et 5% en poids de la quantité de laitier.

Il est apparu qu'une assez faible quantité de sel métallique est nécessaire pour réduire de façon notable l'odeur désagréable.

En augmentant légèrement la quantité de sel, il est possible de réduire le problème olfactif et en même temps d'éviter les problèmes de décoloration.

Le sel métallique utilisé est un sulfate, un nitrate, un chlorure, un carbonate ou un hydroxyde.

Il peut être sous forme solide ou sous forme d'une solution aqueuse.

La présente invention a également pour objet un procédé de préparation d'un liant tel que décrit ci-dessus.

Selon un premier mode de réalisation, lorsque le sel métallique est sous forme solide, le procédé comprend une étape de broyage du laitier de haut fourneau vitrifié permettant d'obtenir le laitier granulé broyé, l'addition d'un sel métallique mono-, di- ou trivalent choisi parmi les sels de bismuth, de cuivre, d'argent, d'étain ou de baryum étant réalisée pendant ou après ladite étape de broyage.

Selon un second mode de réalisation, lorsque le sel métallique est sous forme solide, il peut être mélangé avec le laitier à l'état fondu sortant du haut fourneau, le mélange obtenu est ensuite solidifié par trempe, puis broyé.

Selon encore un autre mode de réalisation, le sel métallique sous forme d'une solution aqueuse est mélangé avec un flux d'eau utilisé pour la trempe du laitier fondu sortant du haut fourneau, le produit obtenu solidifié étant ensuite broyé.

La présente invention porte également sur un procédé d'élimination ou réduction de l'odeur de soufre dégagée lors de la fabrication de matériaux de construction à base de laitiers de haut fourneau, dans lequel le liant mis en oeuvre pour la fabrication desdits matériaux est le liant décrit ci-dessus ou préparé selon le procédé décrit.

La présente invention porte également sur une composition de béton ou mortier comprenant au moins :

- un liant, à base de laitier de haut fourneau granulé broyé,
- un sel métallique mono-, di- ou trivalent choisi parmi les sels de bismuth, de cuivre, d'argent ou d'étain,
- des granulats, agrégats, fillers et/ou sables.

La composition de béton ou mortier peut comprendre un ou plusieurs autres liants hydrauliques, mélangés avec le liant à base de laitier de haut fourneau granulé broyé.

La quantité de sel métallique présent dans la composition varie entre 0,05 et 5% en poids par rapport à la quantité de liant à base de laitier, et encore plus préférentiellement entre 0,2 et 0,5% en poids.

La composition peut comprendre en outre un activateur, c'est-à-dire un système comprenant au moins un composé destiné à améliorer la prise et/ou le durcissement du liant. L'activateur est choisi parmi les activateurs alcalins tels que la chaux hydratée, la soude, la potasse, le silicate de sodium ou le silicate de potassium, les activateurs de type sulfate tels que le sulfate de calcium, et/ou les activateurs à base de microparticules de laitier. De façon préférée, l'activateur sera choisi parmi les activateurs de type sulfate tels que le sulfate de calcium, et/ou les activateurs à base de microparticules de laitier. Ces types d'activateur sont en effet moins dangereux à manipuler et permettent d'opérer dans des conditions douces. La teneur en agent activateur peut varier entre 1 et 10% poids par rapport au poids total de la composition.

La composition peut également contenir des additifs conférant des propriétés particulières. On citera par exemple des agents rhéologiques, des agents rétenteurs d'eau, des agents entraîneurs d'air, des agents épaississants, des agents de protection biocides, des agents dispersants, des pigments, des accélérateurs et/ou des retardateurs, des résines polymériques. La teneur en additifs peut varier entre 0,1 et 10% en poids par rapport au poids total de la composition.

De façon avantageuse, le rapport pondéral entre la quantité de laitier et la quantité de liant hydraulique dans la composition de mortier ou de béton selon la présente invention varie entre 20/80 et 100/0.

Le liant hydraulique est un ciment Portland, un ciment alumineux, un ciment sulfoalumineux, un ciment bélitique, un ciment de mélanges pouzzolaniques comprenant éventuellement des cendres volantes, des fumées de silice, du calcaire, du schiste calciné et/ou des pouzzolanes naturelles ou calcinées.

La composition contient des granulats, agrégats, fillers et/ou sables, et on parle alors couramment de mortier ou de béton en fonction de la taille des granulats. Ces composés jouent notamment sur la rhéologie, la dureté ou l'aspect final du produit. Ils sont généralement formés de sables siliceux, calcaires et/ou silicocalcaires. Les fillers, encore appelés charges, sont des composants calcaires ou siliceux. La teneur de tels granulats, agrégats, fillers et/ou sables dans la composition peut aller jusqu'à 90% poids, et est de préférence comprise entre 20 et 80% poids, par rapport au poids total de la composition, et encore plus préférentiellement entre 50 et 70% poids.

La présente invention porte également sur le procédé de préparation d'une composition de béton ou de mortier telle que décrite ci-dessus.

Selon un premier mode de réalisation, le procédé comprend une étape de préparation du liant à base de laitier de haut fourneau granulé broyé selon le procédé de préparation décrit ci-dessus, puis une étape de mélange dudit liant avec les granulats, sables, fillers et/ou agrégats, et éventuellement avec un ou plusieurs liants hydrauliques, activateurs et additifs. Ainsi le liant à base de laitier est préparé avec le sel métallique avant d'être mélangé aux autres constituants de la composition de mortier ou béton.

Selon un autre mode de réalisation, il est envisageable d'ajouter le sel métallique directement lors de la préparation de la composition de mortier ou de béton. Dans ce cas, le procédé de préparation comprend une étape de mélange du laitier de haut fourneau granulé broyé avec le sable, les agrégats, fillers et/ou granulats, le cas échéant avec le liant hydraulique, les additifs et/ou l'activateur, le sel métallique sous forme solide étant ajouté lors de l'étape de mélange.

Selon un autre mode de réalisation, le procédé de préparation de la composition de mortier ou ciment comprend une étape de préparation d'un mortier ou béton prêt à l'emploi consistant à mélanger le laitier de haut fourneau granulé broyé avec le sable, les agrégats, fillers et/ou les granulats, le cas échéant avec le liant hydraulique, les additifs et/ou l'activateur, puis une étape de gâchage avec de l'eau, le sel métallique étant ajouté pendant ou après l'étape de gâchage.

Avantageusement, le sel métallique, lorsqu'il est présent en solution aqueuse, est mélangé aux additifs liquides présents dans la composition de mortier ou de ciment, ou à l'eau de gâchage.

La présente invention a également pour objet des matériaux de construction tels que le béton, des blocs de construction, des plaques, des enduits, des colles à carrelages, des chapes, des sols obtenus à partir de la composition décrite ci-dessus ou préparée par le procédé décrit.

Les sels de bismuth, cuivre, mercure et argent sont particulièrement préférés dans la mise en oeuvre de ce procédé. La quantité de sel métallique représente entre 0,05 et 5% en poids de la quantité de laitier.

Il est ainsi possible de réduire notablement l'odeur désagréable de soufre. Les sels métalliques sont choisis parmi les sulfates, nitrates, chlorures, carbonates ou hydroxydes.

Exemples

Des tests ont été réalisés sur deux compositions de mortier différentes comprenant comme liant :

- un mélange de 95% poids de laitier de haut fourneau granulé broyé et 5% de ciment Portland, ou
- un mélange de 50% poids de laitier de haut fourneau granulé broyé et 50% poids de ciment Portland.

Différents sels métalliques ont été ajoutés à ces compositions, lors du mélange de ces liants avec les autres constituants de la composition de mortier.
Les sels suivants ont été testés : sulfate de bismuth, sulfate de cuivre, nitrate de cuivre, nitrate d'argent et sulfate d'étain.
Les résultats ont montré que la réduction d'odeur est notable dès lors qu'une quantité dosée de 0,05% de sel métallique par rapport à la quantité de laitier de haut fourneau granulé broyé était présent dans les compositions de mortier.
L'efficacité des sels peut être classifiée de la façon suivante :

$$Bi_2(SO_4)_3 > CuSO_4 \sim CuNO_3 > AgNO_3 > SnSO_4$$

Les produits de solubilité des polysulfures de bismuth, cuivre, argent et étain sont inférieurs à $10^{-10}$.
Les résultats équivalents obtenus avec les deux sels de cuivre montrent que le contre ion (respectivement sulfate ou nitrate) n'a pas d'influence sur l'effet observé.
A titre de comparaison, le sulfate de cuivre a été additionné sous forme anhydre d'une part et d'autre part sous forme pentahydratée. Aucune différence n'a été observée pour ces différentes formes : l'effet sur l'odeur reste identique.
Les résultats les meilleurs en termes d'efficacité ont été obtenus lorsque des sels métalliques de bismuth ou de cuivre ont été ajoutés dans des quantités variant entre 0,1 et 0,5% poids par rapport au laitier de haut fourneau granulé broyé.
Lorsque des quantités supérieures à 0,5% sont ajoutées, on note que l'effet sur l'odeur n'est plus amélioré, mais ces quantités permettent de limiter les problèmes de décoloration bleue/verte qui peuvent être classiquement observés lors de l'hydratation du laitier de haut fourneau granulé broyé.
Les compositions de mortiers comprenant les sels métalliques ont été stockées, soit immédiatement, soit après un ou plusieurs jours sous eau, ce qui empêche l'oxydation et leurs couleurs ont été observées et comparées à un échantillon de référence sans sels métalliques.
Les sels testés peuvent être classés, en termes d'efficacité pour éviter la décoloration de la façon suivante :

$$Bi_2(SO_4)_3 \sim CUSO_4 \sim CUNO_3 \sim CU(OH)_2 > SnSO_4$$

Les résultats obtenus ont montré que les sels de bismuth et les sels de cuivre sont très efficaces, même pour des applications sous eau, lorsque la quantité de sels introduite varie entre 2 et 5% poids par rapport au poids de laitier de haut fourneau granulé broyé.

**Revendications**

1. Liant pour matériaux de construction **caractérisé en ce qu'**il comprend au moins :

    - un laitier de haut fourneau granulé broyé et
    - entre 0,05 et 5% en poids, par rapport à la quantité de laitier, d'un sel métallique mono-, di- ou trivalent choisi parmi les sels de bismuth, de cuivre, d'argent ou d'étain, le sel étant susceptible de former lors du mélange avec ledit laitier un sulfure métallique dont le produit de solubilité $K_{SP}$ mesuré à 25°C est inférieur à $10^{-10}$.

2. Liant selon la revendication 1 **caractérisé en ce que** le produit de solubilité du sulfure métallique $K_{SP}$ mesuré à 25°C est inférieur à $10^{-20}$.

3. Liant selon l'une des revendications précédentes **caractérisé en ce que** le sel métallique est choisi parmi les sels de bismuth, de cuivre ou d'argent.

4. Liant selon l'une des revendications précédentes **caractérisé en ce que** le sel métallique est un sulfate, un nitrate, un chlorure, un carbonate ou un hydroxyde.

5. Liant selon l'une des revendications précédentes **caractérisé en ce que** le sel métallique est sous forme solide ou sous forme d'une solution aqueuse.

6. Procédé de préparation d'un liant selon l'une des revendications 1 à 5 **caractérisé en ce qu'**il comprend une étape de broyage du laitier de haut fourneau vitrifié permettant d'obtenir le laitier granulé broyé, l'addition d'un sel métallique mono-di-ou trivalent choisi parmi les sels de bismuth, de cuivre, d'argent ou d'étain étant réalisée pendant ou après ladite étape de broyage.

7. Procédé de préparation d'un liant selon l'une des revendications 1 à 5 **caractérisé en ce que** le sel métallique sous forme d'une solution solide est mélangé avec le laitier à l'état fondu sortant du haut fourneau, le mélange obtenu étant solidifié par trempe, puis broyé.

8. Procédé de préparation d'un liant selon l'une des revendications 1 à 5 **caractérisé en ce que** le sel métallique sous forme d'une solution aqueuse est mélangé avec un flux d'eau utilisé pour la trempe du laitier fondu sortant du haut fourneau, le produit obtenu solidifié étant ensuite broyé.

9. Procédé d'élimination ou réduction de l'odeur de soufre dégagée lors de la fabrication de matériaux de construction à base de laitiers de haut fourneau, dans lequel le liant mis en oeuvre pour la fabrication desdits matériaux est le liant selon l'une des revendications 1 à 5, ou préparé selon l'une des revendications 6 à 8.

10. Composition de béton ou mortier **caractérisée en ce qu'**elle comprend au moins

- un liant à base de laitier de haut fourneau granulé broyé,
- un sel métallique mono-, di- ou trivalent choisi parmi les sels de bismuth, de cuivre, d'argent ou d'étain,
- du sable, des granulats, fillers et/ou des agrégats.

11. Composition selon la revendication 10 **caractérisée en ce qu'**elle comprend en outre un liant hydraulique mélangé avec le liant à base de laitier de haut fourneau, le rapport pondéral entre la quantité de laitier et la quantité de liant hydraulique variant entre 20/80 et 100/0.

12. Composition selon l'une des revendications 10 ou 11 **caractérisée en ce qu'**elle comprend un activateur, choisi parmi les activateurs alcalins tels que la chaux hydratée, la soude, la potasse, le silicate de sodium ou le silicate de potassium, les activateurs de type sulfate tels que le sulfate de calcium, et/ou les activateurs à base de microparticules de laitier.

13. Composition selon l'une des revendications 10 à 12 **caractérisée en ce qu'**elle comprend en outre un ou plusieurs additifs, choisi parmi des agents rhéologiques, des agents rétenteurs d'eau, des agents entraîneurs d'air, des agents épaississants, des agents de protection biocides, des agents dispersants, des pigments, des accélérateurs et/ou des retardateurs, des résines polymériques.

14. Composition selon l'une des revendications 10 à 13 **caractérisée en ce que** le liant hydraulique est un ciment Portland, un ciment alumineux, un ciment sulfoalumineux, un ciment bélitique, un ciment de mélanges pouzzolaniques comprenant éventuellement des cendres volantes, des fumées de silice, du calcaire, du schiste calciné et/ou des pouzzolanes naturelles ou calcinées.

15. Procédé de préparation d'une composition selon l'une des revendications 10 à 14 **caractérisé en ce qu'**il comprend une étape de préparation du liant à base de laitier de haut fourneau selon l'une des revendications 6 à 8, puis une étape de mélange dudit liant avec les granulats, sables, fillers et/ou agrégats, et éventuellement avec un ou plusieurs liants hydrauliques, activateurs et additifs.

16. Procédé de préparation d'une composition selon l'une des revendications 10 à 14 **caractérisé en ce qu'**il comprend une étape de mélange du laitier de haut fourneau granulé broyé avec les granulats, agrégats, fillers et/ou sables, et éventuellement avec un ou plusieurs liants hydrauliques, activateurs et additifs, le sel métallique sous forme solide étant ajouté lors de l'étape de mélange.

17. Procédé de préparation d'une composition selon l'une des revendications 10 à 14 **caractérisé en ce qu'**il comprend une étape de mélange du laitier de haut fourneau granulé broyé avec les granulats, agrégats, fillers et/ou sables, et éventuellement avec un ou plusieurs liants hydrauliques, activateurs et additifs, puis une étape de gâchage avec de l'eau, le sel métallique étant ajouté pendant ou après l'étape de gâchage.

18. Matériaux de construction tels que le béton, des blocs de construction, des plaques, des enduits, des colles à carrelages, des chapes, des sols obtenus à partir de la composition de mortier ou béton selon l'une des revendications 10 à 14.

**Patentansprüche**

1. Bindemittel für Baumaterialien, **dadurch gekennzeichnet, dass** es mindestens umfasst:

   - eine zerkleinerte granulierte Hochofenschlacke und
   - 0,05 bis 5 Gew.-%, in Bezug auf die Schlackenmenge, eines ein-, zwei- oder dreiwertigen Metallsalzes, ausgewählt aus den Wismut-, Kupfer-, Silber- oder Zinnsalzen, wobei das Salz imstande ist, beim Mischen mit der Schlacke ein Metallsulfid zu bilden, dessen Löslichkeitsprodukt $K_{SP}$, gemessen bei 25 °C, unter $10^{-10}$ ist.

2. Bindemittel nach Anspruch 1, **dadurch gekennzeichnet, dass** das Löslichkeitsprodukt des Metallsulfids $K_{SP}$, gemessen bei 25 °C, unter $10^{-20}$ ist.

3. Bindemittel nach einem der vorangehenden Ansprüche, **dadurch gekennzeichnet, dass** das Metallsalz aus den Wismut-, Kupfer- oder Silbersalzen ausgewählt ist.

4. Bindemittel nach einem der vorangehenden Ansprüche, **dadurch gekennzeichnet, dass** das Metallsalz ein Sulfat, ein Nitrat, ein Chlorid, ein Carbonat oder ein Hydroxid ist.

5. Bindemittel nach einem der vorangehenden Ansprüche, **dadurch gekennzeichnet, dass** das Metallsalz in fester Form oder in Form einer wässrigen Lösung vorliegt.

6. Herstellungsverfahren eines Bindemittels nach einem der Ansprüche 1 bis 5, **dadurch gekennzeichnet, dass** es einen Zerkleinerungsschritt der verglasten Hochofenschlacke umfasst, der erlaubt, die zerkleinerte granulierte Schlacke zu erhalten, wobei die Zugabe eines ein-, zwei- oder dreiwertigen Metallsalzes, ausgewählt aus den Wismut-, Kupfer-, Silber- oder Zinnsalzen, während oder nach dem Zerkleinerungsschritt durchgeführt wird.

7. Herstellungsverfahren eines Bindemittels nach einem der Ansprüche 1 bis 5, **dadurch gekennzeichnet, dass** das Metallsalz in Form einer festen Lösung mit der Schlacke in geschmolzener Form, so wie sie aus dem Hochofen kommt, gemischt wird, wobei das erhaltene Gemisch danach durch Abschrecken gehärtet und danach zerkleinert wird.

8. Herstellungsverfahren eines Bindemittels nach einem der Ansprüche 1 bis 5, **dadurch gekennzeichnet, dass** das Metallsalz in Form einer wässrigen Lösung mit einem für das Abschrecken der geschmolzenen Schlacke, so wie sie aus dem Hochofen kommt, verwendeten Wasserstrom gemischt wird, wobei das erhaltene verfestigte Produkt dann zerkleinert wird.

9. Verfahren zur Vermeidung oder Reduzierung des bei der Herstellung von Baumaterialien auf der Basis von Hochofenschlacken freigesetzten Schwefelgeruchs, wobei das für die Herstellung dieser Materialien verwendete Bindemittel das Bindemittel nach einem der Ansprüche 1 bis 5 ist oder nach einem der Ansprüche 6 bis 8 hergestellt wird.

10. Beton- oder Mörtelzusammensetzung, **dadurch gekennzeichnet, dass** sie mindestens umfasst

    - ein Bindemittel auf der Basis von zerkleinerter granulierter Hochofenschlacke,
    - ein ein-, zwei- oder dreiwertiges Metallsalz, ausgewählt aus den Wismut-, Kupfer-, Silber- oder Zinnsalzen,
    - Sand, Granulate, Filler und/oder Zuschlagstoffe.

11. Zusammensetzung nach Anspruch 10, **dadurch gekennzeichnet, dass** sie ferner ein hydraulisches Bindemittel, gemischt mit dem Bindemittel auf der Basis von Hochofenschlacke, umfasst, wobei das Gewichtsverhältnis zwischen der Schlackenmenge und der Menge des hydraulischen Bindemittels von 20/80 bis 100/0 schwankt.

12. Zusammensetzung nach einem der Ansprüche 10 oder 11, **dadurch gekennzeichnet, dass** sie einen Aktivator umfasst, ausgewählt aus den alkalischen Aktivatoren wie dem Kalkhydrat, der Lauge, dem Kali, dem Natriumsilicat oder dem Kaliumsilicat, den Aktivatoren vom Typ Sulfat wie dem Kalziumsulfat und/oder den Aktivatoren auf der Basis von Schlacke-Mikropartikeln.

**13.** Zusammensetzung nach einem der Ansprüche 10 bis 12, **dadurch gekennzeichnet, dass** sie ferner einen oder mehrere Zusatzstoffe umfasst, ausgewählt aus rheologischen Mitteln, Wasserrückhaltemitteln, Porenbildnern, Verdickungsmitteln, Biozidschutzmitteln, Dispersionsmitteln, Pigmenten, Beschleunigern und/oder Verzögerern, Polymerharzen.

**14.** Zusammensetzung nach einem der Ansprüche 10 bis 13, **dadurch gekennzeichnet, dass** das hydraulische Bindemittel ein Portland-Zement, ein Tonerdezement, ein Sulfoaluminatzement, ein Belitzement, ein Puzzolangemischzement, umfassend eventuell Flugasche, Quarzstaub, Kalk, calcinierten Schiefer und/oder natürliche oder calcinierte Puzzolane, ist.

**15.** Herstellungsverfahren einer Zusammensetzung nach einem der Ansprüche 10 bis 14, **dadurch gekennzeichnet, dass** es einen Herstellungsschritt des Bindemittels auf der Basis von Hochofenschlacke nach einem der Ansprüche 6 bis 8 umfasst, dann einen Mischschritt des Bindemittels mit den Granulaten, Sanden, Fillern und/oder Zuschlagstoffen und eventuell mit einem oder mehreren hydraulischen Bindemitteln, Aktivatoren und Zusatzstoffen.

**16.** Herstellungsverfahren einer Zusammensetzung nach einem der Ansprüche 10 bis 14, **dadurch gekennzeichnet, dass** es einen Mischschritt der zerkleinerten granulierten Hochofenschlacke mit den Granulaten, Zuschlagstoffen, Fillern und/oder Sanden und eventuell mit einem oder mehreren hydraulischen Bindemitteln, Aktivatoren und Zusatzstoffen umfasst, wobei das Metallsalz in fester Form bei dem Mischschritt zugesetzt wird.

**17.** Herstellungsverfahren einer Zusammensetzung nach einem der Ansprüche 10 bis 14, **dadurch gekennzeichnet, dass** es einen Mischschritt der zerkleinerten granulierten Hochofenschlacke mit den Granulaten, Zuschlagstoffen, Fillern und/oder Sanden und eventuell mit einem oder mehreren hydraulischen Bindemitteln, Aktivatoren und Zusatzstoffen umfasst, danach einen Anmachschritt mit dem Wasser, wobei das Metallsalz während oder nach dem Anmachschnitt zugesetzt wird.

**18.** Baumaterialien wie Beton, Bausteine, Platten, Putz, Fliesenkleber, Estriche, Böden, erhalten auf der Basis der Beton- oder Mörtelzusammensetzung nach einem der Ansprüche 10 bis 14.

**Claims**

**1.** A binder for construction materials, **characterized in that** it comprises at least:

- a ground granulated blast furnace slag and
- between 0.05% and 5% by weight, with respect to the amount of slag, of a mono-, di- or trivalent metal salt chosen from bismuth, copper, silver or tin salt, the salt being capable of forming, during mixing with said slag, a metal sulfide for which the solubility product $K_{SP}$, measured at 25°C, is less than $10^{-10}$.

**2.** The binder as claimed in claim 1, **characterized in that** the solubility product of the metal sulfide $K_{SP}$, measured at 25°C, is less than $10^{-20}$.

**3.** The binder as claimed in one of the preceding claims, **characterized in that** the metal salt is chosen from bismuth, copper or silver salts.

**4.** The binder as claimed in one of the preceding claims, **characterized in that** the metal salt is a sulfate, a nitrate, a chloride, a carbonate or a hydroxide.

**5.** The binder as claimed in one of the preceding claims, **characterized in that** the metal salt is in the solid form or in the form of an aqueous solution.

**6.** A process for the preparation of the binder as claimed in one of claims 1 to 5, **characterized in that** it comprises a stage of grinding the vitrified blast furnace slag which makes it possible to obtain the ground granulated slag the addition of a mono-, di- or trivalent metal salt chosen from bismuth, copper, silver or tin salts being carried out during or after said grinding stage.

**7.** A process for the preparation of the binder as claimed in one of claims 1 to 5, **characterized in that** the metal salt in the form of a solid solution is mixed with the molten slag exiting from the blast furnace, the mixture obtained being solidified by quenching and then ground.

8. A process for the preparation of the binder as claimed in one of claims 1 to 5, **characterized in that** the metal salt in the form of an aqueous solution is mixed with a stream of water used for the quenching of the molten slag exiting from the blast furnace, the product obtained, solidified, subsequently being ground.

9. A process for the elimination or reduction of the smell of sulfur given off during the manufacture of construction materials based on blast furnace slags, in which the binder employed for the manufacture of said materials is the binder as claimed in one of claims 1 to 5 or prepared according to one of claims 6 to 8.

10. A concrete or mortar composition, **characterized in that** it comprises at least:

   - a binder based on ground granulated blast furnace slag,
   - a mono-, di- or trivalent metal salt chosen from bismuth, copper, silver or tin salts,
   - sand, aggregates and/or fillers.

11. The composition as claimed in claim 10, **characterized in that** it additionally comprises a hydraulic binder mixed with the binder based on blast furnace slag, the ratio by weight of the amount of slag to the amount of hydraulic binder varying between 20/80 and 100/0.

12. The composition as claimed in either of claims 10 and 11, **characterized in that** it comprises an activator, chosen from alkaline activators, such as slaked lime, sodium hydroxide, potassium hydroxide, sodium silicate or potassium silicate, activators of sulfate type, such as calcium sulfate, and/or activators based on slag microparticles.

13. The composition as claimed in one of claims 10 to 12, **characterized in that** it additionally comprises one or more additives chosen from rheological agents, water-retaining agents, air-entraining agents, thickening agents, biocidal protecting agents, dispersing agents, pigments, accelerators and/or retarders, or polymeric resins.

14. The composition as claimed in one of claims 10 to 13, **characterized in that** the hydraulic binder is a Portland cement, a high-alumina cement, a sulfoaluminate cement, a belite cement or a cement formed of pozzolanic mixtures optionally comprising fly ash, fumed silicas, limestone, calcined schiste and/or natural or calcined pozzolans.

15. A process for the preparation of the composition as claimed in one of claims 10 to 14, **characterized in that** it comprises a stage of preparation of the binder based on blast furnace slag as claimed in one of claims 6 to 8 and then a stage of mixing said binder with the aggregates, sands and/or fillers and optionally with one or more hydraulic binders, activators and additives.

16. A process for the preparation of the composition as claimed in one of claims 10 to 14, **characterized in that** it comprises a stage of mixing the ground granulated blast furnace slag with the aggregates, fillers and/or sands and optionally with one or more hydraulic binders, activators and additives, the metal salt in the solid form being added during the mixing stage.

17. A process for the preparation of the composition as claimed in one of claims 10 to 14, **characterized in that** it comprises a stage of mixing the ground granulated blast furnace slag with the aggregates, fillers and/or sands and optionally with one or more hydraulic binders, activators and additives and then a stage of mixing with water, the metal salt being added during or after the mixing stage.

18. A construction material, such as concrete, building blocks, sheets, coatings, tiling adhesives, screeds or floors obtained from the mortar or concrete composition as claimed in one of claims 10 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2952050 B
- US 6409820 B
- WO 2012083384 A
- WO 2009144141 A
- DE 10257879 B3
- DE 1006327 B1
- JP 54136595 B

**Littérature non-brevet citée dans la description**

- **SULEIMENOV, S.T et al.** Phosphorus slag-based concretes activated by complex additives. *CHEMICAL ABSTRACTS,* 27 Juillet 1981, ISSN 009-2258